# EUROPÄISCHE PATENTSCHRIFT

(11) **EP 1 844 577 B1**
(45) Veröffentlichungstag und Bekanntmachung des Hinweises auf die Patenterteilung: **07.05.2008**
(21) Anmeldenummer: 06700708.8
(22) Anmeldetag: 18.01.2006
(51) Int. Cl.: H04L 12/28

(54) **VERFAHREN ZUR AUTOMATISCHEN AUSWAHL VON MINDESTENS EINEM ELEKTRONISCHEN INFORMATIONS- UND/ODER KOMMUNIKATIONSGERAET UND/ODER EINER GERAETEKOMPONENTE**
METHOD FOR THE AUTOMATIC SELECTION OF AT LEAST ONE ELECTRONIC DATA AND/OR COMMUNICATION DEVICE AND/OR A DEVICE COMPONENT
PROCEDE DE SELECTION AUTOMATIQUE D'AU MOINS UN APPAREIL D'INFORMATION ET/OU DE COMMUNICATION ELECTRONIQUE ET/OU D'UN COMPOSANT D'APPAREIL

(30) Priorität: 24.01.2005 DE 102005003393
(43) Veröffentlichungstag der Anmeldung: 17.10.2007
(73) Patentinhaber: LOEWE OPTA GmbH, 96317 Kronach (DE)
(72) Erfinder: NEUMANN, Jens, 30161 Hannover (DE)
(74) Vertreter: Kinnstätter, Klaus
(86) Internationale Anmeldenummer: PCT/EP2006/050271
(87) Internationale Veröffentlichungsnummer: WO 2006/077220

(56) Entgegenhaltungen:
- WO-A-01/13624
- US-A1- 2004 237 102
- US-B1- 6 828 992

## Beschreibung

Die Erfindung betrifft ein Verfahren zur automatischen Auswahl von mindestens einem elektronischen Informations- und/oder Kommunikationsgerät und/oder einer Gerätekomponente aus einem Verbund von miteinander über ein Funknetzwerk, ein Infrarotlicht-Übertragungsnetzwerk und/oder ein Leitungsnetzwerk verbundenen Geräten und/oder Gerätekomponenten, die mindestens je eine interaktive Sende/Empfangseinheit aufweisen oder mit einer solchen verbunden sind und von denen mindestens ein Gerät oder einer Gerätekomponente im Rahmen der Abarbeitung mindestens einer Funktion ein Steuergerät ist und alle übrigen Geräte in diesem Betriebszustand gesteuerte Geräte sind und miteinander korrespondieren.

Die US 6,828,992 B1 offenbart ein Verfahren zur automatischen Auswahl von Informations-/Kommunikationsgeräten der gattungsgemäßen Art, bei dem ein Steuergerät alle Adresseninformationen der ihnen zugehörigen gesteuerten Geräte kennt. Das Steuergerät entscheidet ob und wann der Zustand eines einzelnen gesteuerten Gerätes abgefragt wird. Dabei adressiert das Steuergerät das entsprechende gesteuerte Gerät mit einer Statusanfrage. Das gesteuerte Gerät antwortet daraufhin mit einer Übertragung seiner gesamten Konfigurationsdatei. Falls erforderlich, kann danach das Steuergerät eine Meldung an den Netzbetreiber generieren, um eine Umkonfigurierung des gesteuerten Gerätes durchzuführen.

Aus der DE 196 41 930 C1 ist ein Kommunikationssystem mit mehreren Teilnehmern bekannt, die jeder mittels einer Schnittstellenschaltung mit einer Ringleitung zur gemeinsamen Übertragung von digitalen Quell- und Steuer daten verbunden sind. Die Quell- und Steuerdaten werden in einem Format übertragen, welches eine getaktete Folge von einzelnen Bitgruppen gleicher Länge vorschreibt, die in Teilbitgruppen unterteilt sind, die jeweils einen Datenkanal bilden. Wenigstens ein Datenkanal ist für die Steuerdaten vorgesehen, die in Datenpaketen mit einer Zieladresse übertragen werden. Ferner enthält die Schnittstellenschaltung jedes Teilnehmers einen Adressdecoder. Das Kommunikationssystem wird vereinfacht und Änderungen am System werden erleichtert, indem wenigstens ein Teilnehmer eine spezielle Adresse hat, mit der ein empfangenes Datenpaket unmittelbar einem Befehlsdecoder innerhalb der Schnittstellenschaltung zugeführt wird, der einen in dem Datenpaket enthaltenen Befehlscode auf Bitbasis decodiert, wobei die Schnittstellenschaltung bzw. der Teilnehmer auf einen dem Befehlscode entsprechenden Befehl unmittelbar reagiert. Mit dieser Ausgestaltung sollen das Kommunikationssystem vereinfacht und Änderungen am System erleichtert werden. Derartige Kommunikationssystem sowie die dem erfindungsgemäßen Verfahren zugrundeliegenden Kommunikationssystem werden dort eingesetzt, wo verschiedenartige elektrische und elektronische Geräte, die in teilweise komplizierter Weise untereinander Informationen austauschen sollen, mittels physisch einfach aufgebauter Datenleitungen miteinander vernetzt sind. Über diese Datenleitungen können die Teilnehmer sowohl Quelldaten als auch Steuerdaten austauschen. Beispielsweise im Audiobereich können Audiodaten von Datenquellen, wie CD-Spieler, Radioempfänger und Kassettenrecorder, an Datensenken, wie Verstärker und Lautsprecherkombinationen, übertragen werden. Gleichzeitig können auch Steuerdaten übertragen werden, beispielsweise zur Steuerung der Lautstärke. Dabei kann ein Gerät gleichzeitig als Datenquelle und -senke ausgebildet sein, wie es beispielsweise bei einem Kassettenrecorder, einem Harddisk-Recorder oder einem CD-Brenner der Fall ist. Bei Kombinationen von Geräten des Audiobereiches mit Geräten des Fernsehbereiches treten Geräte mit Bild empfangenden und Bild sendenden Eigenschaften hinzu bzw. lassen sich diese in einem Netzwerk mit Audiogeräten kombinieren. In solche Verbünde können weiterhin Individualkommunikationsgeräte, wie Telefon- und E-mail-Geräte sowie Computer, Home Server und dergleichen, integriert sein.

Aus der EP 0 725 522 A2 ist ein Verfahren zur gemeinsamen Übertragung von digitalen Quell- und Steuerdaten zwischen über Datenleitungen verbundenen Datenquellen und -senken bekannt, bei dem die Quell- und Steuerdaten in einem Format übertragen werden, welches eine getaktete Folge von einzelnen Bitgruppen gleicher Länge vorschreibt. In diesen Bitgruppen sind für die Quell- und Steuerdaten jeweils bestimmte Bitpositionen reserviert, wobei die für die Quelldaten reservierten Bitpositionen innerhalb einer Bitgruppe einen zusammenhängenden Bereich bilden. Der für die Quelldaten reservierte Bereich einer Bitgruppe wird in mehrere Teilbitgruppen gleicher Länge unterteilt. Die jeder Teilbitgruppe zugewiesenen Quelldaten werden abhängig von den Steuerdaten einer bestimmten Datenquelle oder Datensenke zugeordnet. Die bekannten Kommunikationssysteme und das bekannte Verfahren setzen eine vorgegebene Steuerung an der Kommunikation teilnehmender Geräte voraus.

Der Erfindung liegt die Aufgabe zugrunde, ein Verfahren zur automatischen Auswahl von Informations-/Kommunikationsgeräten in einem Kommunikationsnetzwerk, bestehend aus einem Steuergerät und einer Vielzahl von ihm zugeordneten gesteuerten Geräten, zu optimieren und zu erweitern, um eine benutzerfreundliche Bedienung komplexer Geräteverbünde zu ermöglichen.

Gelöst wird die Aufgabe nach der Erfindung durch ein Verfahren, wie es im Anspruch 1 angegeben ist.

Vorteilhafte weitere Verfahrensschritte und detaillierte Merkmale sind in den Unteransprüchen angegeben.

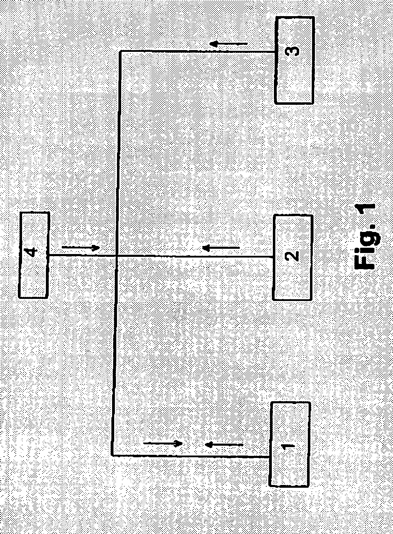

Die Arbeits- und Wirkungsweise nach der Erfindung wird nachfolgend an einem Ausführungsbeispiel anhand des Blockschaltbildes in Figur 1 näher erläutert, wobei davon ausgegangen wird, dass es sich bei dem Verbund um miteinander vernetzte unterhaltungselektronische Geräte handelt. Das in Fig. 1 dargestellte Steuergerät 4 kann beispielsweise ein Farbfemsehempfangsgerät sein, das in bekannter Weise mittels einer am Gerät vorgesehenen Ortsbedienung mittels Stellgliedern direkt oder über eine menügeführte Bedienungsoberfläche auf dem Display oder über einen Fernbedienungsgeber bedient werden kann. Das gesteuerte Gerät 1 kann beispielsweise ein Videorecorder, das gesteuerte Gerät 2 ein DVD-Player und das gesteuerte Gerät 3 ein weiterer Videorecorder sein. Betätigt der Benutzer während einer laufenden Sendung z.B. die Aufnahmetaste auf der Fernbedienung, so empfängt das Steuergerät 4 diesen Fernsteuerbefehl und gibt seinerseits einen initialen Steuerungsbefehl "Aufnahme" an alle gesteuerten Geräte 1, 2, 3. Der DVD-Player (gesteuertes Gerät 2) signalisiert, dass es nicht in der Lage ist, die Funktion "Aufnahme" durchzuführen durch eine Steuerinformation, die das Empfangsteil im Steuergerät 4 empfängt. Die beiden Videorecorder (Geräte 1 und 3) werten in Abhängigkeit des Empfangs des initialen Steuerungsbefehls zunächst den momentanen Gerätezustand aus. Befindet sich das Gerät beispielsweise bereits im Aufnahmezustand und nimmt eine Sendung auf oder es ist keine Kassette eingelegt, dann kann der Videorecorder, z.B. Gerät 1, die Funktion "Aufnahme" nicht ausführen, mit der Konsequenz, dass auch dieses Gerät eine Steuerungsinformation an das Steuergerät sendet, die dies signalisiert. Liegen entsprechende Verhältnisse auch bei dem Gerät 3 vor und sendet dieses ebenfalls eine Steuerungsinformation an das Steuergerät, so stellt das Steuergerät fest, dass der initiale Steuerungsbefehl von keinem gesteuerten Gerät bearbeitet werden kann und das Steuergerät "Farbfemsehempfangsgerät" erzeugt keinen finalen Steuerungsbefehl. Wenn hingegen ein Videorecorder, z.B. Gerät 1, in der Lage ist, die Funktion durchzuführen, dann signalisiert dieses Gerät dem Steuergerät 4 dies durch eine entsprechende Steuerungsinformation unter Hinzufügung seiner Adresse, so dass das Fernsehgerät das Quellensignal zur Aufnahme an den Videorecorder übertragen kann. Zuvor generiert es dabei den finalen Steuerungsbefehl "Aufnahme" an das Gerät 1. Das Gerät 1 empfängt den finalen Steuerungsbefehl und nimmt die laufende Sendung auf.

Der mit diesem Auswahlverfahren gegebene Vorteil ist offenkundig und zeigt sich insbesondere in komplexen Geräteumgebungen, wie dies anhand von nachfolgenden Ausprägungen und Erweiterungen verdeutlicht wird.

Erweitert der Benutzer die Gerätekonfiguration beispielsweise um einen Festplattenrecorder (HDR) und einen DVD-Recorder, dann konkurrieren potentiell vier gesteuerte Geräte um den initialen Steuerungsbefehl "Aufnahme" gemäß dem vorherigen Beispiel. Die vier gesteuerten Geräte werten ihren momentanen Zustand zwecks Erstellung von Steuerungsinformationen aus. Die Steuerungsinformation kann z.B. ein digitaler Zahlenwert oder ein analoger Signalpegel sein, dessen Höhe die Eignung des gesteuerten Gerätes zur Ausführung des initialen Steuerungsbefehls kennzeichnet. In der weiteren Beschreibung sei davon ausgegangen, dass die Steuerungsinformationen durch einen Signalpegel codiert sind.

Wenn der Benutzer die Aufnahmetaste auf der Fernbedienung drückt und zu diesem Zeitpunkt weder eine beschreibbare DVD in den DVD-Recorder, noch eine Videokassette in den Videorekorder eingelegt ist, dann signalisieren diese beiden Geräte diesen Zustand in der Steuerungsinformation, beispielhaft durch den erniedrigten Signalpegel "0". Wenn der Festplattenrecorder aufnahmebereit ist, dann signalisiert er diesen Zustand durch einen höheren Signalpegel, z.B. den Signalpegel "5". Das Steuergerät wählt automatisch ohne weitere Benutzeraktion das Gerät mit dem höchsten Signalpegel für die Aufnahme der laufenden Sendung aus, indem es den finalen Steuerungsbefehl zu diesem Gerät schickt, in diesem Fall an den Festplattenrecorder.

Wenn im Unterschied zu dem beschriebenen Betriebszustand in dem DVD-Recorder hingegen eine beschreibbare DVD vorhanden ist, dann sendet dieser als Steuerungsinformation beispielhaft einen Signalpegel "4" an das Steuergerät "Farbfemsehgerät". Das Steuergerät vergleicht die beiden Pegel und sendet den finalen Steuerungsbefehl an den Festplattenrekorder, der zuvor einen Signalpegel höheren Wertes signalisiert hat, und veranlasst diesen, die Aufnahme durchzuführen.

Wenn hingegen der vorhandene Speicherplatz des Festplattenrecorders unter eine bestimmte Schwelle fällt, kann die Schaltungsvorrichtung im Festplattenrecorder bei dem nächsten Empfang eines initialen Steuerungsbefehls "Aufnahme" eines Steuergerätes einen niedrigeren Signalpegel, z.B. "3", erzeugen und an das Steuergerät senden. In diesem Fall. würde das Steuergerät automatisch den DVD-Recorder zur Aufnahme auswählen.

Grundsätzlich können die Schaltungsanordnungen in gesteuerten Geräten verschiedene Aspekte zur Berechnung der Steuerungsinformationen berücksichtigen. Z.B. können zeitliche Zusammenhänge ausgewertet werden. Wenn in Erweiterung. beispielhaft in einer geringen Zeitspanne, z.B. 1 Minute, vor dem Auslösen des initialen Steuerungsbefehl "Aufnahme" eine Videokassette in den Videorekorder eingelegt wurde, dann kann dieser Videorecorder diesen Sachverhalt dadurch berücksichtigen, dass er einen erhöhten Signalpegel, z.B. "10", als Steuerungsinformation ausgibt. In diesem Fall wählt das Steuergerät automatisch den Videorecorder als Adressaten des finalen Steuerungsbefehls und damit als Aufnahmegerät aus.

Das erfindungsgemäße Verfahren bietet den Vorteil einer einfachen und schnellen Bedienung. In dem ersten dargestellten Beispiel führt die einmalige Bedienung der Aufnahmetaste zur Aufnahme der aktuellen Sendung. Dabei kann die Auswahl des Aufnahmegerätes von zahlreichen Faktoren abhängen, z.B. den vorhandenen Geräten, den Zuständen der vorhandenen Geräte, Umgebungsparameter und Zeit. Die Zahl und Art der zu berücksichtigenden Parameter sind weder durch das Verfahren noch durch das Steuergerät begrenzt oder eingeschränkt.

Bekannte Verfahren zur Steuerung von Funktionalität in vernetzten Geräteverbünden überlassen die Geräteauswahl hingegen ausschließlich dem Benutzer. Einige Verfahren basieren auf Auswahllisten in den Bedienmenüs oder sogar auf der Übertragung von Benutzerschnittstellen (z.B. EP0859306 oder HAVi) zwischen den Geräten. Diese Verfahren stören durch die Darstellung eines Bildschirmmenüs die Wiedergabe der aktuell laufenden Sendung und verzögern durch die Komplexität der Bedienung z.B. die Funktion Aufnahme". Insbesondere wenn ein Benutzer schnell z.B. eine aktuelle Meldung in den Nachrichten aufnehmen möchte, erweist sich das erfindungemäße Verfahren als besonders vorteilhaft.

Andere bekannte Verfahren zur Auswahl von zu steuernden Geräten in Geräteverbünden basieren auf Universalfernbedienungen, die sich zur Bedienung von Geräten in komplexen Geräteverbünden mit vielen Geräten nicht eignen, z.B. dann nicht, wenn gesteuerte Geräte in verschiedenen Räumen stehen. Z.B. lässt sich ein Audio/Video-Server im Keller nicht mit der Fernbedienung im Wohnzimmer bedienen. Zudem ist die Bedienung mit der Universalfembedienung komplexer, da der Benutzer zunächst das gesteuerte Gerät selbst mittels Betätigung eines zusätzlichen Bedienelements auswählen muss und erst anschließend die zu steuernde Aktion durch die Betätigung eines weiteren Bedienelements auswählen kann. Bei dem erfindungsgemäßen Verfahren hingegen entfällt die Auswahl des gesteuerten Gerätes durch den Benutzer.

Ein weiterer Vorteil liegt in der einfachen Realisierung des Steuergerätes. Dieses benötigt keinerlei Informationen über Anzahl, Typen und Zustände der vernetzten steuerbaren Geräte. Dadurch verringert sich der Aufwand der Datenhaltung und Datenverarbeitung in dem Steuergerät. Das Steuergerät benötigt in einfachster Ausführung nur einen Satz von Steuerungsbefehlen und gegebenenfalls Angaben über die Parameter. Außerdem muss eine Schaltungsanordnung in dem Steuerungsgerät zur Auswertung der Steuerungsinformationen über entsprechende Algorithmen verfügen.
Das Steuergerät benötigt insbesondere keine Kenntnis oder Fähigkeit zur Verarbeitung oder Auswertung von Eint7ussfaktoren, die spezifisch für Geräte oder Anwendungen sind (z.B. eingelegte Medien, unterstützte Formate/ Codes, vorhandener Speicherplatz).

Der Stand der Technik in der PC-Industrie zur Steuerung von Funktionalität in Geräteverbünden basiert auf der Installation mindestens eines Gerätetreibers oder eines anderen Softwareprogramms für jedes der Geräte in dem Verbund auf dem PC, der das Steuergerät bildet Dieses Verfahren bedingt die Installation von Steuerungsprogrammen für jedes gesteuerte Gerät in dem Steuergerät und stellt hohe Anforderungen an den Speicherplatz und die Rechenkapazität des Steuergerätes, insbesondere in komplexen Geräteumgebungen. Bei einem Kommunikationssystem nach der Erfindung hingegen ist eine solche bestimmte Konfiguration oder Administration nicht erforderlich.

Wenn der Benutzer seinen Geräteverbund nachträglich erweitert, wie vorher beschrieben, dann steht die Funktionalität dieser Geräte automatisch zur Verfügung. Das erfindungsgemäße Verfahren adaptiert eine Steuerung selbstständig an Änderungen der Geräteverbünde und der Gerätezustände. Diese Adaptivität bietet den Vorteil, dass auch bei zunehmender Mobilität der Geräte, speziell in der Unterhaltungselektronik, verschiedene Geräte dem Verbund hinzugefügt werden können, z.B. digitale Kameras, MP3-Abspielgeräte oder mobile DVD-Player, ohne den Bedienkomfort zu beeinträchtigen. Das System funktioniert also auch bei dynamischer Erweiterung von Heimnetzwerken.

Folgende Weiterbildungen und Konfigurationen des Verfahrens haben sich als vorteilhaft erwiesen. Jedes Gerät kann gesteuertes Gerät und gleichzeitig Steuergerät sein. Der finale Steuerungsbefehl kann gleich dem initialen Steuerungsbefehl sein oder auf diesen verweisen. Der finale Steuerungsbefehl braucht keine Informationen zu enthalten sondern braucht nur einem ausgewählten Gerät zu signalisieren, dass es den initialen Steuerungsbefehl auszuführen hat. Alle Geräte verfügen bereits über die notwendigen Informationen durch den Empfang des initialen Steuerungsbefehls und können so vorprogrammiert sein, dass sie nur noch auf den finalen Steuerungsbefehl warten, um die bereits angenommene Funktionsausführung vornehmen zu können. Der finale Steuerungsbefehl kann auch an mehr als ein ausgewähltes gesteuertes Gerät verschickt werden. In diesem Fall braucht er keine Adressierung für ein Gerät zu enthalten. Sind an der Ausführung der Funktionssteuerung zwei oder mehrere Geräte direkt beteiligt, so empfiehlt es sich, diese jedoch einzeln oder im Verbund zu adressieren. Es können auch unterschiedliche finale Steuerungsbefehle an verschiedene gesteuerte Geräte verschickt werden, z.B. "Abspielen" an einen Videorecorder und "Aufnahme" an einen DVD-Recorder. Die Steuerungsbefehle generiert das Steuergerät nach Erhalt der Informationen von den zu steuernden Geräten.

Ferner brauchen gesteuerte Geräte nicht auf initiale Steuerbefehle mit Steuerungsinformationen zu antworten, wenn sie für die Bearbeitung des initialen Steuerbefehls nicht geeignet sind oder den Steuerbefehl nicht zu interpretieren vermögen.

Ferner braucht die Auswertung der Steuerungsinformationen aller gesteuerten Geräte nicht in dem Steuergerät zu erfolgen. Die Steuerungsinformationen können von einem anderen oder mehreren Geräten empfangen werden. Wenn die Selbstorganisation nicht eindeutig ist, d.h. Steuerungsinformationen unterschiedlicher gesteuerter Geräte gleich oder gleichwertig sind, dann können verschiedene Auswahlprozeduren vorgesehen sein, insbesondere die folgenden:
o Das Steuergerät wählt zufällig aus.
o Die selbstorganisierte Steuerung wird nicht durchgeführt und das Steuergerät fällt auf die normale (Standard)-Bedienung zurück.
o Das Steuergerät trifft eine Vorauswahl und lässt diese durch den Benutzer bestätigen.

Auch kann eine Personalisierung in dem Steuergerät und in den gesteuerten Geräten in der Weise erfolgen, dass Benutzerprofile bei der Erstellung der Steuerungsinformationen und bei der Auswertung derselben vom antwortenden Gerät oder vom Steuergerät berücksichtigt werden. Steuergeräte können auch Informationen über die angeschlossenen Geräte besitzen und/oder auswerten. Das Steuergerät kann z.B. die Anzahl der steuerbaren Geräte reduzieren. Das Steuergerät sendet z.B. den initialen Steuerbefehl "Aufnahme" nicht an ein CD-Abspielgerät.

Das erfindungemäße Verfahren ist auch unabhängig von Vernetzungs- bzw. Verbindungstechnologien. Es lässt sich auch in heterogenen Umgebungen anwenden. Z. B. kann das Steuergerät "Fernsehempfangsgerät" sowohl über einen Scart-Anschluss mit gesteuerten Geräten verbunden als auch zusätzlich über ein (Funk)-Netzwerk mit zusätzlichen gesteuerten Geräten vernetzt sein. Auch können initiale Steuerbefehle zahlreiche Parameter enthalten, beispielsweise Längenangaben über den aufzunehmenden Sendebeitrag, das anzuwendende Kopierverfahren, die unterstützenden Übertragungsprotokolle und Informationen zum digitalen Rechte-Management.

Die Erfindung wird anhand der weiteren Figuren in den Zeichnungen nachfolgend ergänzend beschrieben.

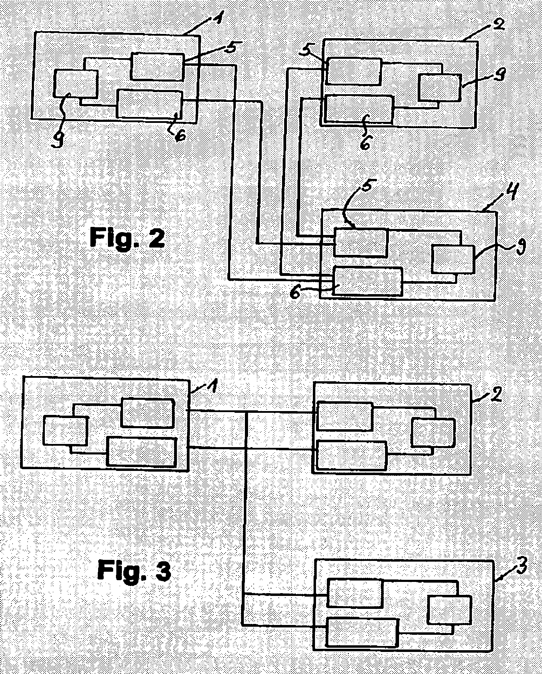

Fig. 2 zeigt einen solchen Geräteverbund, der beispielsweise aus den dargestellten Geräten 1 und 2 sowie dem Steuergerät 4, das grundsätzlich auch ein gesteuertes Gerät sein kann, jedoch durch das Erstansprechen beispielsweise über einen Fernbedienungsgeber zum Steuergerät 4 wird, besteht. Das Steuergerät und die übrigen Geräte weisen jeweils Sendeeinheiten 5 und Empfangseinheiten 6 auf sowie Geräteschaltungen 9 für die Funktionen, die durch die Geräte realisiert werden sollen. Über die mindestens eine Sende- und Empfangs-Einheit 5, 6 in jedem der Geräte 1, 2, 4 korrespondieren die Empfangs- und Sende-Einheiten mit dem Steuergerät. Die Kommunikation kann dabei drahtgebunden oder drahtlos erfolgen. Über ein solches Bussystem kann eine Vielzahl von Geräten miteinander verbunden sein. Jedes der Geräte ist in der Lage, empfangene Informationen zu verarbeiten und selbst Informationen über die Sendeeinheit des eigenen Gerätes zu verschicken, die von dem Steuergerät ausgewertet und zur Generierung von finalen Steuerungsbefehlen ausgewertet werden.

Fig. 3 zeigt die angesprochene Vernetzung des Steuergerätes und der gesteuerten Geräte, die sich im Wesentlichen durch die Art ihrer Steuerschaltungen und ihrer Anbindungen an den Verbund unterscheiden können. Auch dieses Ausführungsbeispiel geht von einem Verbund von drei Geräten 1, 2, 3 aus. Dabei kann jedes der Geräte zum Steuergerät werden. Es kann aber auch eines der Geräte, wie in Fig. 2 dargestellt, von vornherein das Steuergerät darstellen. Ein Steuergerät muss zusätzlich eine Schaltungsanordnung aufweisen, die von dem Empfangsteil empfangene Steuerungsinformationen in einen Steuerungsbefehl umsetzt, und diesen Steuerungsbefehl mittels der Sendeeinheit an die Empfangseinheit eines gesteuerten Gerätes überträgt. Schaltungen in gesteuerten Geräten setzen einen Steuerungsbefehl in eine Steuerungsinformation um. Schaltungen in Steuerungsgeräten setzen mehrere Steuerungsinformationen (maximal eine pro angeschlossenes gesteuertes Gerät) in einen Steuerungsbefehl um.

Das Steuergerät in Fig. 2 verfügt beispielsweise über vier Anschlüsse, die gesteuerten Geräte über jeweils zwei. Es braucht aber auch nur ein einziger Anschluss vorgesehen zu sein, wenn ein serieller Bus vorhanden ist. Ein möglicher weiterer Verbund der einfachsten dezentralen Realisierung des Verfahrens zur automatischen Geräteauswahl ist in Fig. 3 dargestellt. Alle Sendeeinheiten und Empfangseinheiten sind miteinander vernetzt, und jedes Gerät verfügt über eine Schaltungsanordnung zur Auswertung empfangener Befehle bzw. empfangener Informationen und zur Erzeugung von Informationen bzw. Befehlen, die über die Sendeeinheit an alle Geräte des Verbundes verteilt werden.

In vielen Bus-Systemen oder Vemetzungstechnologien ist es üblich, die Geräte über gemeinsame Leitungen (bzw. Frequenzen) bidirektional zu verbinden. In diesem Fall sind alle Geräte auf die gleiche Weise an den Geräteverbund angeschlossen. Dann ist nicht nur das Steuergerät mit allen gesteuerten Geräten verbunden, sondern auch jedes gesteuerte Gerät mit allen gesteuerten Geräten. In diesem Fall kann man, indem man alle Geräte mit Steuerungsfunktionalität ausstattet, einen Verbund gleichwertiger Geräte ermöglichen. Besonders vorteilhaft ist hierbei der Verzicht auf ein ausgezeichnetes zentrales Gerät. Jedes gesteuerte Gerät kann die Rolle eines Steuergerätes übernehmen.

In dem dargestellten Beispiel in Fig. 3 könnte diese dezentrale Realisierung beispielhaft dazu führen, dass der Geräteverbund über die Fernbedienung des Fernsehers, die Fernbedienung des Videorecorders, die Fernbedienung des DVD-Recorders und die Fernbedienung des Festplattenrecorders, aber auch durch die direkt an den Geräten angebrachten Bedienelemente einer Ortsbedienung parallel bedient werden kann. Ein Druck auf die Aufnahmetaste auf der Fernbedienung des Videorecorders hat die gleichen Auswirkungen wie ein Druck auf die Aufnahmetaste einer anderen Fernbedienung oder die Aufnahmetaste an einem anderen Gerät. Unabhängig davon, zu welchem Gerät das Bedienelement gehört, wählt das System jeweils das am besten geeignete Gerät zur Ausführung aus.

Das Verfahren legt kein Übertragungsmedium fest. Abhängig von dem verwendeten Bussystem oder der genutzten Netzwerktechnologie müssen die Geräte zusätzliche Anforderungen erfüllen, die sich aus diesen Technologien ergeben.

Das Verfahren legt ebenfalls kein Übertragungsprotokoll fest und definiert keine Steuerungsbefehle, da die meisten Anwendungen des Verfahrens systemweit einheitliche und gleichzeitig komplexe Steuerungsbefehle und Steuerungsinformationen erfordern. So bieten sich insbesondere Technologien zur Realisierung an, die bereits zahlreiche dieser Befehle und deren Parameter definieren, wie z.B. HAVi oder Universal Plug & Play. Durch die Nutzung dieser Technologien entstehen zusätzliche Anforderungen, die charakteristisch für die jeweils angewandte Technologie sind. Beispiele sind HTTP-Server und XML-Parser für Universal Plug & Play oder Java Virtuelle Maschinen für HAVi. Solche Systeme lassen sich in die Geräte mit integrieren. Auch ist es möglich, übliche Fembedienungsformate zu verwenden, die entweder den initialen Steuerungsbefehl darstellen oder aus denen dieser abgeleitet wird. In diesem Fallen werden die initialen Steuerungsbefehle nur von solchen Geräten im Verbund ausgewertet, die in der Lage sind, diese zu interpretieren. Dennoch kann das Steuergerät einen für alle gültigen und auch von allen oder einigen Geräten verstandenen finalen Steuerungsbefehl ausgeben.

Grundsätzlich können verschiedenste Geräte in einem Geräteverbund zusammengeschaltet sein und auf die gleiche Art und Weise gesteuert werden. Die Anwendungsfunktionalitäten können ferner aus beliebigen Anwendungsgebieten kommen, wie z.B. Heizung, Beleuchtung oder Unterhaltungselektronik. Funktionalitäten wie z.B. "Wiedergabe" oder "Aufnahme" sind Beispiele aus der Unterhaltungselektronik.

Bezogen auf einen Verbund von Unterhaltungselektronikgeräten können z.B. mehrere Videorecorder, Harddisk-Recorder, Femsehempfangsgeräte, HiFi-Anlagen, Audioverstärker, aktive Lautsprecher, CD-Player, Speichergeräte, Digitalkameras, Kommunikationsgeräte für den Internetanschluss und für den Telefonbetrieb miteinander verbunden sein. Die Schaltungsanordnungen der gesteuerten Geräte werten die empfangenen finalen Steuerungsbefehle aus und vollziehen die gewünschte Funktionssteuerung. Die Steuerungsinformationen können grundsätzlich von jedem Gerät empfangen werden. Als Steuergerät wird dabei das Gerät verstanden, das den initialen Steuerbefehl versendet. In dieser Ausprägung kann bei Steuergeräten auf eine Empfangseinheit verzichtet werden, was allerdings voraussetzt, dass tabellenmäßig alle Befehlsstrukturen abgespeichert sind, um die gesteuerten Geräte ansteuern zu können. Für die Vernetzung können auch Infrarotlichtnetze, Bluetooth-Technologien sowie Funknetze verwendet werden. Beispielhaft wird hier auf die DE 103 39 123 C2 verwiesen, die eine Funkvemetzung zwischen Haupt- und Nebengeräten in unterschiedlichen Räumen angibt.

Es ist ersichtlich, dass unter Anwendung des erfindungsgemäßen Verfahrens jede Erweiterung auch nachträglich möglich ist und eine automatische Anpassung gegeben ist. Auch kann eine komplexe Software-Infrastruktur zur Unterstützung von Selbstorganisation in intelligenter Umgebung zur Vernetzung vorgesehen sein. Über einen Kommunikationsbus können die als Agenten vorgesehenen Geräte Botschaften austauschen und spezifische Sprachen des Kanals publizieren. Diese Botschaft wird an alle Agenten weitergeleitet, die den Kanal subskribiert haben und deren Subskriptionsfilter die Botschaft akzeptieren. Ein Kanal kann ein relativ komplexes Konstrukt aus allen Kommunikationsnetzwerken, allen Empfangs-/Sendeeinheiten in allen Geräten, allen Steuerungsschaltungen in den gesteuerten Geräten zur Auswertung der initialen Steuerungsbefehle und zur Erzeugung der Steuerungsinformationen sowie alle Steuerungsschaltungen in allen Steuerungsgeräten zur Auswertung der Steuerungsinformationen zwecks Erzeugung des finalen Steuerungsbefehls aufweisen.

## Patentansprüche

1. Verfahren zur automatischen Auswahl von mindestens einem elektronischen Informations- und/oder Kommunikationsgerät und/oder einer Gerätekomponente aus einem Verbund von miteinander über ein Funknetzwerk, ein Infrarotlicht-Übertragungsnetzwerk und/oder ein Leitungsnetzwerk verbundenen Geräten und/oder Gerätekomponenten, die mindestens je eine interaktive Sende/Empfangseinheit aufweisen oder mit einer solchen verbunden sind und von denen mindestens ein Gerät oder eine Gerätekomponente im Rahmen der Abarbeitung mindestens einer Funktion ein Steuergerät ist und alle übrigen Geräte in diesem Betriebszustand gesteuerte Geräte sind und miteinander korrespondieren, wobei:
a) ein Steuergerät (4) über seine Sendeeinheit (5) einen initialen Steuerungsbefehl oder einen von einem Fembedienungsgeber, einer Ortsbedienung oder von einem integrierten Signalgeber generierten initialen Steuerungsbefehl ohne individuelle Adresse an alle Empfangseinheiten (6) der miteinander vernetzten Geräte (1, 2, 3) verteilt;
b) in jedem gesteuerten Gerät (1, 2, 3) eine Schaltungsanordnung (9) oder ein vorhandener Mikroprozessor unter Anwendung eines entsprechenden Programms den initialen Steuerungsbefehl unter Berücksichtigung des momentanen Gerätezustandes des jeweils gesteuerten Gerätes (1, 2, 3) in eine Steuerungsinformation umsetzt oder den initialen Steuerungsbefehl ignoriert, wenn er diesen nicht zu interpretieren vermag;
c) die Sendeeinheiten (6) der gesteuerten Geräte (1, 2, 3) eine individuelle Steuerungsinformation an die Empfangseinheit (5) des Steuergerätes (4) oder an die Empfangseinheiten (5) der definierten Steuergeräte (1, 2, 3) unter Angabe ihrer individuellen Adresse übertragen, wodurch die Steuerungsinformation das jeweilige gesteuerte Gerät (1, 2, 3) die Eignung für die Bearbeitung des initialen Steuerungsbefehls signalisiert;
d) eine Schaltungsanordnung (9) oder ein Mikroprozessor in dem Steuergerät (4) oder den Steuergeräten (1, 2, 3) die Gesamtheit der von den vernetzten, angesteuerten Geräten empfangenen Steuerungsinformationen in mindestens einen finalen Steuerungsbefehl umsetzt, der von der Sendeeinheit (6) vom jeweiligen Steuergerät (4) ausgewählten steuerbaren Geräten (1, 2, 3) im Netzwerk unter Einschluss der jeweiligen individuellen Adresse übertragen wird.

2. Verfahren nach Anspruch 1, **dadurch gekennzeichnet, dass** jedes Gerät (1, 2, 3) einen Mikroprozessor aufweist, der von einem Programm gesteuert wird, das veranlasst, dass bei Empfang eines Femsteuerbefehls oder eines Steuerbefehls von einer Ortsbedienung am Gerät oder in Abhängigkeit von anderen Steuerungsbefehlen zur Auslösung einer Funktionssteuerung als definiertes Steuergerät (Master) (4) und/oder als angesteuertes Gerät (Slave) (1, 2, 3,4) aktiviert wird.

3. Verfahren nach Anspruch 1, **dadurch gekennzeichnet, dass** derfinale Steuerungsbefehl im Wesentlichen die gleichen Funktionssteuerungsbefehle wie der initiale Steuerungsbefehl enthält und zusätzlich die individuelle Adresse oder die individuellen Adressen zur Steuerung des Steuergerätes (4) oder der Geräte (1, 2, 3), die an einer Funktionsablaufsteuerung beteiligt sind.

4. Verfahren nach Anspruch 1 oder 3, **dadurch gekennzeichnet, dass** ein Steuergerät (3), das an der Funktionssteuerung nicht beteiligt ist, nach Ausgabe des finalen Steuerungsbefehls für neue Steuerungsprozesse aktiviert wird.

5. Verfahren nach Anspruch 1, **dadurch gekennzeichnet, dass** die Steuerungsinformationen aller gesteuerten Geräte (1, 2, 3) von dem definierten Steuergerät (4) oder von einem anderen oder mehreren Geräten (1, 2, 3) empfangen und ausgewertet werden.

6. Verfahren nach Anspruch 5, **dadurch gekennzeichnet, dass** mindestens in einem Steuergerät (1, 2, 3, 4) eine Auswerte- und Steuersoftware implementiert ist, die bei Empfang von gleichen oder gleichwertigen Steuerungsinformationen von unterschiedlichen gesteuerten Geräten (1, 2, 3, 4) anhand eines Auswahlprogramms das oder die zu adressierenden gesteuerten Geräte für die Funktionsablaufsteuerung nach bestimmten Kriterien auswählt oder einer Vorrangszuordnung unterwirft.

7. Verfahren nach Anspruch 6, **dadurch gekennzeichnet, dass** die Auswahl zufällig erfolgt oder eine selbst organisierte Steuerung durch eine Standardbedienung aus listenmäßig erfassten Gerätekombinationen zur Abarbeitung der Funktion ersetzt oder eine Vorauswahl getroffen wird, die vom Benutzer zu bestätigen ist.

8. Verfahren nach einem der vorhergehenden Ansprüche, **dadurch gekennzeichnet, dass** bei der Erstellung der Steuerungsinformation und der Auswertung derselben zur Unterstützung einer Personalisierung in dem Steuergerät (4) und den gesteuerten Geräten (1, 2, 3) Benutzerprofile berücksichtigt werden.

9. Verfahren nach einem der vorhergehenden Ansprüche, **dadurch gekennzeichnet, dass** auf Anforderung eines Steuergerätes (4) an steuerbare Geräte (1, 2, 3) diese an das Steuergerät (4) Informationen über das gesteuerte Gerät (1, 2, 3) und die möglichen Bedien- und Steuerfunktionen senden und dass das Steuergerät (4) unter Einbeziehung der empfangenen individuellen Steuerungsinformation gemäß Merkmal c im Anspruch 1 den finalen Steuerungsbefehl an ein oder mehrere gesteuerte Geräte (1, 2, 3) abgibt, um die gewünschte Funktionssteuerung zu bewirken.

10. Verfahren nach einem der vorhergehenden Ansprüche, **dadurch gekennzeichnet, dass** es in einen Geräteverbund mit heterogener Vemetzungsstruktur eingesetzt wird.

11. Verfahren nach einem der vorhergehenden Ansprüche, **dadurch gekennzeichnet, dass** es in einem Geräteverbund aus unterhaltungselektronischen Geräten und/oder Geräten der Informationstechnologie verwendet wird.

12. Verfahren nach einem der vorhergehenden Ansprüche, **dadurch gekennzeichnet, dass** der initiale und der finale Steuerbefehl und die individuellen Steuerungsinformationen digitalcodierte Datenwerte sind.

13. Verfahren nach Anspruch 1 oder 12, **dadurch gekennzeichnet, dass** der initiale Steuerbefehl neben Funktionssteuerbefehlen Informationen über zu verarbeitende Funktionen enthält, und dass die initialen Steuerbefehle in gleichen oder auch in unterschiedlichen Datenwortformaten übertragen werden.

## Claims

1. Method for automatic selection of at least one electronic information and/or communications apparatus and/or an apparatus component from a combination of apparatuses and/or apparatus components, which are connected together by way of a radio network, an infrared light transmission network and/or a conductor network and have at least one respective interactive transmitting/receiving unit or are connected with such and of which at least one apparatus or an apparatus component is, in the context of execution of at least one function, a control apparatus and all other apparatuses in this operational state are controlled apparatus and correspond with one another, wherein
a) a control apparatus (4) distributes by way of a transmitting unit (5) an initial control command or an initial control command, which is generated by a remote control transmitter, a local control or an integrated signal transmitter, without individual addressing to all receiving units (6) of the interlinked apparatuses (1, 2, 3);
b) in each controlled apparatus (1, 2, 3) a circuit arrangement (9) or a microprocessor which is present converts, with use of an appropriate program, the initial control command with consideration of the instantaneous apparatus state of the respective controlled apparatus (1, 2, 3) into control information or disregards the initial control command when it is not capable of interpreting this;
c) the transmitting units (6) of the controlled apparatuses (1, 2, 3) transmit an individual control information to the receiving unit (5) of the control apparatus (4) or to the receiving units (5) of the defined control apparatuses (1, 2, 3) with statement of their individual address, whereby the control information signals to the respective controlled apparatus (1, 2, 3) the suitability for processing the initial control command;
d) a circuit arrangement (9) or a microprocessor in the control apparatus (4) or the control apparatuses (1, 2, 3) converts the totality of the control data, which is received from the linked, controlled apparatus, into at least one final control command which is transmitted by the transmitting unit (6) of the respective control apparatus (4) to selected controllable apparatuses (1, 2, 3) in the network with inclusion of the respective individual address.

2. Method according to claim 1, **characterised in that** each apparatus (1, 2, 3) comprises a microprocessor which is controlled by a program which arranges that on receipt of a remote control command or a control command from a local control at the apparatus or in dependence on other control commands for triggering of a function control it is activated as a defined control apparatus (master) (4) and/or as a controlled apparatus (slave) (1, 2, 3, 4).

3. Method according to claim 1, **characterised in that** the final control command contains substantially the same function control commands as the initial control command and additionally the individual address or the individual addresses for control of the control apparatus (4) or the apparatuses (1, 2, 3) which participate in a function sequence control.

4. Method according to claim 1 or 3, **characterised in that** a control apparatus (3) not participating in the function control is activated after output of the final control command for a new control process.

5. Method according to claim 1, **characterised in that** the control data of all controlled apparatuses (1, 2, 3) are received and evaluated by the defined control apparatus (4) by another apparatus or several apparatuses (1, 2, 3).

6. Method according to claim 5, **characterised in that** there is implemented at least in one control apparatus (1, 2, 3, 4) an evaluating and control software which on receipt of the same or equivalent control data from different controlled apparatuses (1, 2, 3, 4) selects on the basis of a selection program the controlled apparatus or apparatuses, which is or are to be addressed, for the function sequence control according to specific criteria or subjects it then to a priority association.

7. Method according to claim 6, **characterised in that** the selection takes place randomly or replaces a self-organised control by a standard operation from apparatus combinations, which are recorded in terms of a list, for executing the function or a preselection is undertaken which is to be confirmed by the user.

8. Method according to one of the preceding claims, **characterised in that** on creation of the control information and evaluation thereof user profiles are considered for supporting a personalisation in the control apparatus (4) and the controlled apparatuses (1,2,3).

9. Method according to one of the preceding claims, **characterised in that** on demand of a control apparatus (4) to controllable apparatus (1, 2, 3) these transmit to the control apparatus (4) data about the controlled apparatus (1, 2, 3) and the possible operating and control functions and that the control apparatus (4) delivers, with inclusion of the received individual control information according to feature c in claim 1, the final control command to one or more controlled apparatuses (1, 2, 3) in order to effect the desired function control.

10. Method according to one of the preceding claims, **characterised in that** it is used in an apparatus combination with heterogeneous linking structure.

11. Method according to one of the preceding claims, **characterised in that** it is used in an apparatus combination of electronic entertainment apparatuses and/or apparatuses of information technology.

12. Method according to one of the preceding claims, **characterised in that** the initial and the final control command and the individual control data are digitally coded data values.

13. Method according to claim 1 or 12, **characterised in that** the initial control command contains, apart from function control commands, data about functions to be processed and that the initial control commands are transmitted in the same or also in different data word formats.

## Revendications

1. Procédé de sélection automatique d'au moins appareil électronique d'information et/ou de communication et/ou d'un composant d'appareil parmi une liaison d'appareils et/ou de composants d'appareils reliés les uns aux autres par le biais d'un réseau radio, d'un réseau de transmission par lumière infrarouge et/ou d'un réseau de lignes, lesquels comportent au moins chacun une unité interactive d'émission/réception ou sont reliés à une telle unité et parmi lesquels au moins un appareil ou un composant d'appareil est un appareil de commande dans le cadre du traitement d'au moins une fonction et tous les autres appareils sont des appareils commandés dans cet état de service et correspondent les uns avec les autres, dans lequel
a) un appareil de commande (4) distribue sans adresse individuelle à toutes les unités de réception (6) des appareils mis ensemble en réseau (1, 2, 3) par le biais de son unité d'émission (5) une instruction de commande initiale ou une instruction de commande initiale générée par un transmetteur de télécommande, par une utilisation locale ou par un transmetteur de signaux intégré ;
b) dans chaque appareil commandé (1, 2, 3), un agencement de circuit (9) ou un microprocesseur présent convertit par application d'un programme correspondant l'instruction de commande initiale en tenant compte de l'état momentané de l'appareil commandé respectif (1, 2, 3) en une information de commande ou ignore l'instruction de commande initiale s'il n'est pas capable d'interpréter celle-ci ;
c) les unités d'émission (6) des appareils commandés (1, 2, 3) transmettent une information de commande individuelle à l'unité de réception (5) de l'appareil de commande (4) ou aux unités de réception (5) des appareils de commande définis (1, 2, 3) en indiquant leur adresse individuelle, moyennant quoi l'information de commande de l'appareil commandé respectif (1, 2, 3) signale l'aptitude pour le traitement de l'instruction de commande initiale ;
d) un agencement de circuit (9) ou un microprocesseur dans l'appareil de commande (4) ou dans les appareils de commande (1, 2, 3) convertit la totalité des informations de commande reçues par les appareils commandés, mis en réseau, en au moins une instruction de commande finale qui est transmise par l'unité d'émission (6) de l'appareil de commande respectif (4) aux appareils pouvant être commandés sélectionnés (1, 2, 3) dans le réseau en incorporant l'adresse individuelle respective.

2. Procédé selon la revendication 1, **caractérisé en ce que** chaque appareil (1, 2, 3) comporte un microprocesseur qui est commandé par un programme qui fait en sorte que, lors de la réception d'une instruction de télécommande ou d'une instruction de commande par une utilisation locale au niveau de l'appareil ou en fonction d'autres instructions de commande à des fins de déclenchement d'une commande de fonctions, chaque appareil est activé en tant qu'appareil de commande défini (maître) (4) et/ou appareil commandé (esclave) (1,2, 3,4).

3. Procédé selon la revendication 1, **caractérisé en ce que** l'instruction de commande finale contient pour l'essentiel les mêmes instructions de commande de fonctions que l'instruction de commande initiale et en plus l'adresse individuelle ou les adresses individuelles pour commander l'appareil de commande (4) ou les appareils (1, 2, 3) qui sont concernés par une commande séquentielle de fonctions.

4. Procédé selon la revendication 1 ou 3, **caractérisé en ce qu'**un appareil de commande (3), qui n'est pas concerné par la commande de fonctions, est activé après la sortie de l'instruction de commande finale pour de nouveaux processus de commande.

5. Procédé selon la revendication 1, **caractérisé en ce que** les informations de commande de tous les appareils commandés (1, 2, 3) sont reçues et évaluées par l'appareil de commande défini (4) ou par un autre ou plusieurs autres appareils (1,2,3).

6. Procédé selon la revendication 5, **caractérisé en ce que** dans au moins un appareil de commande (1, 2, 3, 4) est implémenté un logiciel d'évaluation et de commande qui, lors de la réception d'informations de commande identiques ou de même valeur de différents appareils commandés (1, 2, 3, 4), sélectionne selon des critères définis à l'aide d'un programme de sélection le ou les appareils commandés à adresser pour la commande séquentielle de fonctions, ou le ou les soumet à une classe de priorité.

7. Procédé selon la revendication 6, **caractérisé en ce que** la sélection a lieu de manière aléatoire ou qu'elle remplace une commande auto-organisée par une commande standard parmi des combinaisons d'appareils saisies selon une liste à des fins de traitement de la fonction ou qu'il est fait une présélection qui doit être confirmée par l'utilisateur.

8. Procédé selon l'une des revendications précédentes, **caractérisé en ce que**, lors de la génération de l'information de commande et de l'évaluation de celle-ci, il est tenu compte de profils de l'utilisateur à des fins de support d'une personnalisation dans l'appareil de commande (4) et dans les appareils commandés (1, 2, 3).

9. Procédé selon l'une des revendications précédentes, **caractérisé en ce que**, sur une demande d'un appareil de commande (4) à des appareils pouvant être commandés (1, 2, 3), ceux-ci envoient à l'appareil de commande (4) des informations sur l'appareil commandé (1, 2, 3) et les fonctions de service et de commande possibles, et **en ce que** l'appareil de commande (4) en associant l'information de commande individuelle reçue selon la caractéristique c de la revendication 1 remet l'instruction de commande finale à un ou plusieurs appareils commandés (1, 2, 3) pour exécuter la commande de fonction souhaitée.

10. Procédé selon l'une des revendications précédentes, **caractérisé en ce qu'**il est mis en oeuvre dans une liaison d'appareils avec une structure hétérogène de mise en réseau.

11. Procédé selon l'une des revendications précédentes, **caractérisé en ce qu'**il est employé dans une liaison d'appareils parmi des appareils électroniques de loisir et/ou des appareils de la technologie de l'information.

12. Procédé selon l'une des revendications précédentes, **caractérisé en ce que** l'instruction de commande initiale, l'instruction de commande finale et les informations de commandes individuelles sont des valeurs de données codées sous forme numérique.

13. Procédé selon la revendication 1 ou 12, **caractérisé en ce que** l'instruction de commande contient, en plus des instructions de commande de fonctions, des informations sur des fonctions à traiter et **en ce que** les instructions de commande initiales sont transmises avec des formats de mots de données identiques ou également différents.
